# EUROPÄISCHE PATENTSCHRIFT

(11) **EP 3 772 408 B1**
(45) Veröffentlichungstag und Bekanntmachung des Hinweises auf die Patenterteilung: **28.01.2026**
(21) Anmeldenummer: 20185423.9
(22) Anmeldetag: 13.07.2020
(51) Int. Cl.: B29C 70/30, B29C 70/12, B29B 11/16, D04H 1/22, D04H 1/732, B29L 31/30, B29K 105/26

(54) **VERFAHREN ZUR HERSTELLUNG DREIDIMENSIONALER FORMTEILE**
METHOD FOR PRODUCING THREE-DIMENSIONAL SHAPED PARTS
PROCÉDÉ DE FABRICATION DE PIÈCES MOULÉES EN TROIS DIMENSIONS

(30) Priorität: 06.08.2019 DE 102019121222
(43) Veröffentlichungstag der Anmeldung: 10.02.2021
(73) Patentinhaber: E.F. Faserformteil Entwicklungsgesellschaft UG (haft ungsbeschränkt), 76185 Karlsruhe (DE)
(72) Erfinder: Förster, Egon, 76744 Wörth (DE)
(74) Vertreter: LBP Lemcke, Brommer & Partner Patentanwälte mbB

(56) Entgegenhaltungen:
- DE-B3- 10 324 735
- US-A- 5 336 455

## Beschreibung

Die vorliegende Erfindung betrifft ein Verfahren zur Herstellung dreidimensionaler Formteile nach dem Oberbegriff des Anspruchs.

Auf der einen Seite werden dreidimensionale Formteile in einer Vielzahl an Anwendungen benötigt. Beispielsweise ist der Einsatz als Dämmteile, Verkleidungen, Fahrzeugteile oder Ähnliches bekannt. Dabei ist es bekannt, solche Formteile unter anderem aus Fasermaterialien, Kunststoffen, PU-Schäumen oder Metallen herzustellen.

Dazu ist es aus dem Stand der Technik bekannt, solche Formteile aus Fasermaterialien herzustellen, denen Zusatzstoffe beigemischt werden, um Steifigkeit und andere Eigenschaften der Formteile zu beeinflussen. Dazu ist bspw. in der DE 10 324 735 ein Verfahren beschrieben, welches den Oberbegriff des Hauptanspruchs 1 offenbart.

Auf der anderen Seite werden die Entsorgungsproblematik und der sinnvolle Einsatz bzw. die sinnvolle Wiederverwendung von Recyclingmaterialien immer dringlicher. Das Müllproblem spielt sowohl in der öffentlichen Wahrnehmung als auch unter finanziellen Gesichtspunkten im Bereich der Entsorgungslogistik eine immer wichtigere Rolle. Die angestrebten Recycling-Quoten gerade von Verpackungsmaterialien wie Verbundverpackungsmaterialien, beispielsweise in Form von Getränkeverpackungen, werden jedoch oft nicht erreicht. Ein Grund ist, dass es an sinnvollen Einsatzmöglichkeiten für die zu recycelnden Verpackungen fehlt.

Bei den bisher bekannten Recyclingmethoden ist eine aufwendige Trennung von Papieranteilen und Folienanteilen der Verpackung notwendig.

Der vorliegenden Erfindung liegt daher die Aufgabe zugrunde, ein Verfahren vorzuschlagen, die in einfacher Art und Weise den Einsatz von Recyclingmaterialien zur Herstellung von dreidimensionalen Formteilen ermöglichen.

Gelöst wird diese Aufgabe durch ein Verfahren zur Herstellung dreidimensionaler Formteile gemäß Anspruch 1. Vorteilhafte Ausgestaltungen finden sich hier in den Unteransprüchen 2 bis 9.

Das erfindungsgemäße Verfahren zur Herstellung dreidimensionaler Formteile wird, wie an sich bekannt, mit einer mehrteiligen Form durchgeführt. Die Form umfasst zumindest eine Unterform, eine Einblasoberform sowie eine Oberform. Die Form weist Öffnungen auf. Durch die Öffnungen kann Luft, die in die Form geblasen wird, entweichen. Die Innenseite der Form bestimmt zumindest teilweise die Kontur des Formteils.

Dabei umfasst das Verfahren die folgenden Verfahrensschritte:
A Bereitstellen der mehrteiligen Form aus Unterform und Einblasoberform,
B Einblasen von Formteilmaterialelementen durch eine Luftströmung in die mehrteilige Form, wobei die Luft, wie bereits ausgeführt, durch Öffnungen in der mehrteiligen Form entweicht, so dass sich die Formteilmaterialelemente an den Innenseiten der mehrteiligen Form anlagern,
C Abnehmen der Einblasoberform;
D Aufsetzen der Oberform;
E Verbinden der Formteilmaterialelemente untereinander durch Wärmezufuhr und/oder durch ein Bindemittel;
F Pressen der mehrteiligen Form aus Oberform und Unterform
wobei als Formteilmaterialelemente Recyclingmaterial verwendet wird.

Die Erfindung ist somit in der Erkenntnis der Anmelderin begründet, dass mit dem oben beschriebenen Verfahren beliebige dreidimensionale Formteile aus Recyclingmaterial hergestellt werden können. Dadurch ergibt sich zum einen eine vorteilhafte Möglichkeit, Recyclingmaterial wiederzuverwenden, um das Recyclingmaterial wiederzuverwerten. Zum anderen stellt das Recyclingmaterial ein kostengünstiges Material für die Herstellung der dreidimensionalen Formteile dar.

Im Rahmen der vorliegenden Erfindung umfasst der Begriff "Recyclingmaterial" Leichtverpackungen (LVP) aus Kunststoff, Alu, Weißblech oder Verbundmaterialien wie Getränkekartons.

In einer vorteilhaften Weiterbildung der Erfindung wird das Recyclingmaterial vor dem Einblasen geschreddert. Dadurch kann die Größe der Formteilmaterialelemente gezielt gesteuert werden. Dies verbessert die Qualität der dreidimensionalen Formteile, da eine homogene Größe der Formteilmaterialelemente zur Qualität und Stabilität der dreidimensionalen Formteile beiträgt.

Vorzugsweise weisen die Formteilmaterialelemente eine Größe im Bereich von 5mm bis 50 mm, bevorzugt 15 mm bis 300 mm auf.

In einer bevorzugten Weiterbildung der Erfindung wird vor und/oder während des Verfahrensschritts B ein Bindemittel, vorzugsweise in Form eines duroplastischen Pulvers, zugegeben. Alternativ kann auch eine Bindefaser oder thermoplastische Folienreste als Binder dem Recyclingmaterial zugegeben werden. Dadurch ergibt sich der Vorteil, dass auch als Bindemittel Recyclingmaterial eingesetzt werden kann. Als Fasermaterial können Polyethylen oder Polypropylen, als Pulver Epoxy oder Acryl oder ähnliche Materialien mit einem Schmelzpunkt < 220° Celsius eingesetzt werden. Die Bindefasern weisen bevorzugt eine Länge auf zwischen 3-60mm, die Folienreste können in Flakes von 3-50mm untergemischt werden.

Durch die Zugabe eines Bindemittels kann die Verbindung der Formteilmaterialelemente untereinander verbessert bzw. gesteuert werden. Es liegt jedoch ebenso im Rahmen der Erfindung, dass kein Bindemittel zugegeben wird. Bei der Verwendung von Recyclingmaterialien kann beispielsweise bei üblichen Verbundmaterialien wie Getränkeverpackungskartons auf ein Bindemittel verzeichnet werden, da das enthaltene Polyethylen als Bindemittel wirkt, welches vorzugsweise durch die Wärme im Verfahrensablauf aktiviert wird.

Zur Optimierung von Eigenschaften des dreidimensionalen Formteils, wie beispielsweise Erhöhung der Festigkeit, können dem Recyclingmaterial Fasermaterialien beigemischt werden. Vorzugsweise können Bastfasern, Glas, Basalt, Aramid zur Erhöhung der Festigkeit vor dem Verfahrensschritt B dem Recyclingmaterial beigegeben werden. Die Fasern sollten eine Länge von 30-150mm aufweisen.

Vorzugsweise werden die Formteilmaterialelemente oder das Formteil in einem Verfahrensschritt verpresst, dadurch werden die Formteilmaterialelemente verdichtet und die Stabilität des Formteils erhöht. Bevorzugt erfolgt das Verpressen in dem Verfahrensschritt F nach dem Verfahrensschritt D. Es liegt jedoch ebenfalls im Rahmen der Erfindung, dass das Verpressen bereits durch bzw. mit dem Aufsetzen der Oberform in Verfahrensschritt D erfolgt. Der Verfahrensschritt D kann also ebenfalls nach dem Verfahrensschritt E erfolgen. Alternativ kann das Verpressen durch einen zusätzlichen Verfahrensschritt vor oder nach dem Verfahrensschritt E erfolgen.

In einer weiteren Ausführungsform der Erfindung wird das Verbinden der Formteilmaterialelemente untereinander durch Wärmezufuhr in dem Verfahrensschritt E und das Verpressen in dem Verfahrensschritt F mit unterschiedlichen Werkzeugen durchgeführt. Dabei kann ein Wechsel von der Einblasoberform auf die Oberform erfolgen. Insbesondere bevorzugt kann ein Formteil-Rohling nach dem Verfahrensschritt F in einem Zwischenschritt von einem ersten Werkzeug in ein zweites transferiert werden. In dem zweiten Werkzeug erfolgt dann vorzugsweise das Verpressen des Formteil-Rohlings zu dem dreidimensionalen Formteil.

In einer weiteren bevorzugten Ausführungsform der Erfindung wird die mehrteilige Form zumindest teilweise vor dem Einblasen der Formteilmaterialelemente im Verfahrensschritt B erhitzt. Vorzugsweise werden Unterform und Oberform vor dem Verfahrensschritt B erhitzt. Durch das Erhitzen der mehrteiligen Formen wird der Binder in den Formteilmaterialelementen direkt nach dem Einblasen und Verpressen aktiviert und die Formteilmaterialelemente verbinden sich untereinander.

Optional kann ein Einblasrahmen eingesetzt werden, der ebenfalls Teil der mehrteiligen Form ist. Die mehrteilige Form besteht in diesem Fall aus der Unterform, der Einblasoberform, dem Einblasrahmen sowie der Oberform. Vorzugsweise werden zunächst in die mehrteilige Form aus Unterform, Einblasoberform und Einblasrahmen die Formteilmaterialelemente und ein Binder eingeblasen bis die mehrteilige Form vollständig ausgefüllt ist. Die Unterform definiert vorzugsweise die untere Kontur des dreidimensionalen Formteils.

Im Anschluss wird durch Wärme der Binder aktiviert. Die Formteilmaterialelemente verbinden sich untereinander. Nach diesem Schritt liegt ein Formteil-Rohling vor.

Im nächsten Schritt wird die Einblasoberform abgenommen und gegen die Oberform ausgetauscht. Die Oberform definiert vorzugsweise die obere Kontur des fertigen Formteils.

Mit dem Aufsetzen der Oberform wird der Formteil-Rohling zu der endgültigen Form des dreidimensionalen Formteils verpresst. Im Anschluss kann das fertige dreidimensionale Formteil entnommen werden.

Eine Vorrichtung zur Herstellung dreidimensionaler Formteile umfasst, wie an sich bekannt, eine mehrteilige Form, die Öffnungen aufweist, und deren Innenseite zumindest teilweise die Kontur des dreidimensionalen Formteils bestimmt. Die Form ist zumindest aus Unterform, Einblasoberform und Oberform aufgebaut. Weiter ist ein Zufuhrmittel zum Einblasen von Formteilmaterialelementen in die mehrteilige Form vorgesehen sowie Mittel zum Verbinden der Formteilmaterialelemente durch Wärmezufuhrmittel und/oder durch Zufuhrmittel für ein Bindemittel.

Wesentlich ist, dass die Zufuhrmittel ausgebildet sind, als Formteilmaterialelemente Recyclingmaterial in die mehrteilige Form einzublasen.

In einer vorzugsweisen Ausführungsform der Vorrichtung ist die mehrteilige Form ausgebildet, aus den Formteilmaterialelementen aus Recyclingmaterial ein dreidimensionales Formteil zu bilden.

Um einen Transport des Recyclingmaterials zu gewährleisten, sind vorzugsweise die Zufuhrmittel, insbesondere Zuleitungen zu Einblasdüsen der mehrteiligen Form, in Bezug auf die Größe angepasst. Vorzugsweise haben die Zuleitungen zu den Einblasdüsen einen Durchmesser von ca. 100-125 mm.

Üblicherweise sind weitere Zuführmittel, bevorzugt die Materialzuführungswalzen in den Füllschächten mit Nadeln bestückt. Die Materialzuführungswalzen sind vorzugsweise derart mit Nadeln bestückt, dass ein Festsetzen mit dem Recyclingmaterial zu verhindern. Dazu sind die Abstände zwischen den Nadeln vergrößert.

Die Vorrichtung weist ebenfalls die vorgenannten Vorteile des erfindungsgemäßen Verfahrens bzw. der beschriebenen bevorzugten Ausführungsformen des erfindungsgemäßen Verfahrens auf.

Vorzugsweise wird als Recyclingmaterial Tetra Pack^{®} - Material oder anderes Recyclingmaterial in Form von Verpackungen, Getränkekartons oder ähnlichem eingesetzt.

In einer bevorzugten Weiterbildung ist die Vorrichtung wie folgt aufgebaut:
Das Recyclingmaterial wird geschreddert in einem Schredder und auf einem Transportband der Vorrichtung transportiert. In einem Öffner der Vorrichtung wird das Recyclingmaterial grob geöffnet, d. h. aufgelockert und ausgebreitet und über das Transportband weiter in eine Verteilstation transportiert.

In der Verteilstation erfolgt die Verteilung auf einen oder mehrere Füllschächte, die zu den mehrteiligen Formen führen. Optional kann hier ein Binder zugegeben werden.

Aus den Füllschächten wird das Material über Düsen mit einer Luftströmung in die mehrteilige Form, zu diesem Zeitpunkt bestehend aus Unterform und Einblasoberform sowie optional ein Einblasrahmen, eingeblasen.

Ist die mehrteilige Form gefüllt, wird die Einblasoberform abgenommen und die Unterform mit den eingeblasenen Formteilmaterialelementen in eine Heiz-Press-Station transportiert. In der Heizstation wird die Oberform aufgesetzt und der Binder in den Formteilmaterialelementen erwärmt. Typische Erwärmungszeiten sind 15 - 100 sec. Die Formteilmaterialelemente verbinden sich untereinander. Es liegt ein Formteil-Rohling vor.

Gleichzeitig oder nach einer definierbaren Heizzeit, vorzugsweise im letzten Drittel der Heizzeit wird der Formteil-Rohling gepresst. Nach dem Verpressen kann das dreidimensionale Formteil aus der Pressstation entnommen werden. Optional kann mit einer Stanze das dreidimensionale Formteil bei Bedarf auf eine gewünschte Endkontur gestanzt werden.

Weitere bevorzugte Merkmale und Ausführungen des erfindungsgemäßen Verfahrens und der Vorrichtung werden im Folgenden anhand von Ausführungsbeispielen und den Figuren erläutert. Ausführungsbeispiele sind lediglich vorteilhafte Ausgestaltungen der Erfindung und nicht einschränkend.

Dabei zeigt:
- Figur 1: die Verfahrensschritte eines Ausführungsbeispiels des erfindungsgemäßen Verfahrens,
- Figur 2: ein Ausführungsbeispiel eine erfindungsgemäße Vorrichtung zur Herstellung dreidimensionaler Formteile.

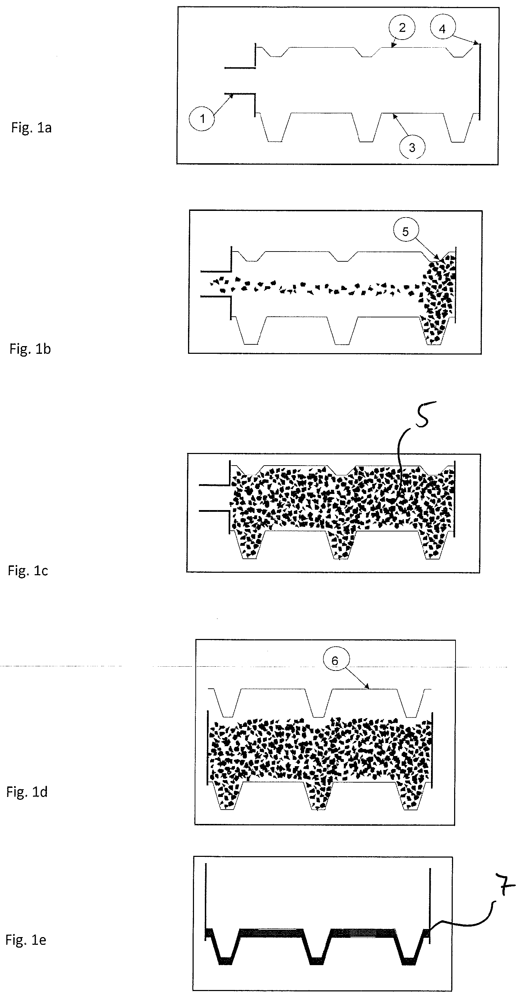

Figur 1 zeigt in mehreren Teilabbildungen die Verfahrensschritte eines Ausführungsbeispiels des erfindungsgemäßen Verfahrens.

Figur 1a zeigt eine schematische Darstellung der mehrteiligen Formen 1 mit Unterform 3, Einblasoberform 2 und einem Einblasrahmen 4 in Verfahrensschritt A. Die Unterform 3 bestimmt die untere Kontur des dreidimensionalen Formteils. Der Einblasrahmen 4 ermöglicht das Aufsetzen Einblasoberform 2 als temporäre Hilfsform, die von der späteren Kontur des Formteils abweicht. Die verschiedenen Teile der mehrteiligen Form sind nicht luftdicht abgeschlossen, vielmehr hat die mehrteilige Form Öffnungen, durch die die Luft entweichen kann.

Figur 1b zeigt das Einblasen der Formteilmaterialelemente 5 in Verfahrensschritt B. Die Formteilmaterialelemente 5 lagern sich im Inneren und an den Innenseiten der mehrteiligen Form 1 an, während die Luft durch Öffnungen in der mehrteiligen Form entweicht.

Figur 1c zeigt eine mehrteilige Form, die mit Formteilmaterialelementen 5 gefüllt ist.

Im Anschluss wird in Verfahrensschritt D die Einblasoberform 2 abgenommen. Dargestellt ist in Figur 1d das Aufsetzen der Oberform 6 in Verfahrenssschritt D. Die Oberform 6 bestimmt mit ihrer Innenkontur die obere Kontur des späteren dreidimensionalen Formteils. In diesem Stadium wird in Verfahrensschritt E mittels Wärme der Binder aktiviert. Dadurch verbindet sich die Formteilmaterialelemente 5 zu einem Formteil-Rohling.

Mit Verpressen der Oberform 6 wird der Formteil-Rohling zu dem Formteil verpresst.

Figur 1e zeigt das fertige dreidimensionale Formteil 7 nach der Verpressung.

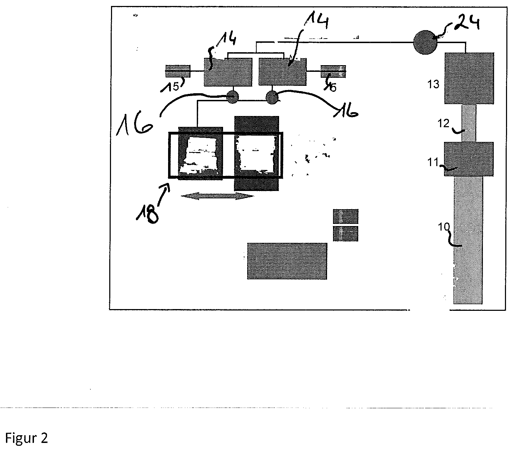

Figur 2 zeigt eine Vorrichtung zur Durchführung eines Ausführungsbeispiels des erfindungsgemäßen Verfahrens.

Die Vorrichtung umfasst ein Transportband 10 und ein Transportband 12. Weiter ist ein Öffner 11 sowie ein Transportlüfter 24 vorgesehen. Im weiteren Produktionsverlauf sind Füllschächte 14 vorgesehen, die in Wirkverbindung mit Pulverstreuern 15 stehen.

Ausgehend von den Füllschächten 14 sind Gebläse 16 vorgesehen sowie eine Heiz-Press-Station 18.

Das Recyclingmaterial wird geschreddert oder bereits geschreddert angeliefert und auf dem Transportband 10 zum Öffner 11 transportiert. Dort wird das Recyclingmaterial grob geöffnet und über das Transportband 12 zu dem Bunker 13 transportiert zur Bevorratung und Vormischung.

Das Recyclingmaterial wird auf die Füllschächte 14 verteilt. An den Füllschächten 4 wird über die Pulverstreuer 15 gegebenenfalls ein Binder, vorliegend ein duroplastisches Pulver zugegeben.

Ausgehend von den Füllschächten wird das Recyclingmaterial in die mehrteiligen Formen der Einblasstationen 18 geblasen. Das Verfahren ist zu Figur 1 im Detail beschrieben.

Zum Verpressen kann die gefüllte mehrteilige Form in der Heiz-Press-Station 18 transferiert werden. In der Heiz-Press-Station wird die Oberform aufgesetzt. Dort wird das duroplastische Pulver in der gefüllten mehrteiligen Form erwärmt und im Anschluss auf Endmaß gepresst.

Das fertige dreidimensionale Formteil 7 kann aus der Pressstation entnommen werden und ggfs. mit einer Stanze bei Bedarf auf Endkontur gestanzt werden.

## Patentansprüche

1. Verfahren zur Herstellung dreidimensionaler Formteile (7) mit einer mehrteiligen Form aus Unterform, Einblasoberform und Oberform (2, 3, 4, 6) mit Öffnungen, deren Innenseite zumindest teilweise die Kontur des Formteils (7) bestimmt, folgende Verfahrensschritte umfassend:
A Bereitstellen der mehrteiligen Form aus zumindest Unterform und Einblasoberform (2, 3),
B Einblasen von Formteilmaterialelementen (5) durch eine Luftströmung in die mehrteilige Form (2, 3, 4, 6), wobei die Luft durch Öffnungen in der mehrteiligen Form (2, 3, 4, 6) entweicht, sodass sich die Formteilmaterialelemente (5) an den Innenseiten der mehrteiligen Form (2, 3, 4, 6) anlagern;
C Abnehmen der Einblasoberform (3);
D Aufsetzen der Oberform (6);
E Verbinden der Formteilmaterialelemente (5) untereinander durch Wärmezufuhr und/oder durch ein Bindemittel;
F Pressen der mehrteiligen Form aus Oberform und Unterform (2, 6);
**dadurch gekennzeichnet, dass**
als Formteilmaterialelemente (5) Recyclingmaterial verwendet wird.

2. Verfahren nach Anspruch 1,
**dadurch gekennzeichnet,**
**dass** das Recyclingmaterial (5) vor dem Einblasen geschreddert wird.

3. Verfahren nach Anspruch 1 oder 2,
**dadurch gekennzeichnet,**
**dass** die Formteilmaterialelemente (5) eine Größe zwischen 5 bis 50 mm, vorzugsweise im Bereich zwischen 15 mm und 30 mm aufweisen.

4. Verfahren nach einem der vorangegangenen Ansprüche,
**dadurch gekennzeichnet,**
**dass** in einem Verfahrensschritts G nach dem Verfahrensschritts F weitere Formteilmaterialelemente (5), vorzugsweise in einem zweiten Fülldurchgang, durch eine Luftströmung eingeblasen werden.

5. Verfahren nach einem der vorangegangenen Ansprüche,
**dadurch gekennzeichnet,**
**dass** vor oder während des Verfahrensschritts B ein Bindemittel, vorzugsweise in Form eines duroplastischen Pulvers oder eine Bindefaser oder thermoplastische Folienreste zugegeben wird.

6. Verfahren nach einem der vorangegangenen Ansprüche,
**dadurch gekennzeichnet,**
**dass** vor oder während des Verfahrensschritts B Fasermaterial eingeblasen wird.

7. Verfahren nach einem der vorangegangenen Ansprüche,
**dadurch gekennzeichnet,**
**dass** die Formteilmaterialelemente (5) und/oder das Formteil (7) in einem Verfahrensschritt G verpresst werden, sodass die Formteilmaterialelemente (5) verdichtet werden.

8. Verfahren nach einem der vorangegangenen Ansprüche,
**dadurch gekennzeichnet,**
**dass** Verbinden der Formteilmaterialelemente (5) untereinander durch Wärmezufuhr in dem Verfahrensschritt E und das Verpressen in dem Verfahrensschritt G in unterschiedlichen Werkzeugen durchgeführt werden, insbesondere, dass der Formteil-Rohling in einem Zwischenschritt von einem ersten Werkzeug in ein zweites Werkzeug transferiert wird.

9. Verfahren nach einem der vorangegangenen Ansprüche,
**dadurch gekennzeichnet,**
**dass** die mehrteilige Form (2, 3, 4, 6) zumindest teilweise vor dem Einblasen der Formteilmaterialelemente (5) in Verfahrensschritt B erhitzt wird, vorzugsweise, dass Unterform und Oberform vor dem Verfahrensschritt B erhitzt werden.

## Claims

1. A method for producing three-dimensional molded parts (7) with a multi-part mold consisting of a lower mold, an upper blow mold, and an upper mold (2, 3, 4, 6) with openings, the inner side of which at least partially determines the contour of the molded part (7), comprising the following method steps:
A providing the multi-part mold consisting of at least a lower mold and an upper blow mold (2, 3),
B blowing molded material elements (5) into the multi-part mold (2, 3, 4, 6) by an air flow, wherein the air escapes through openings in the multi-part mold (2, 3, 4, 6) so that the molded material elements (5) adhere to the inner surfaces of the multi-part mold (2, 3, 4, 6);
C removing the upper blow mold (3);
D applying the upper mold (6);
E connecting the molded material elements (5) to each other by supplying heat and/or by a binder;
F pressing the multi-part mold made of upper mold and lower mold (2, 6);
**characterized in that**
recycling material is used for the molded material elements (5).

2. The method according to claim 1,
**characterized in that**
the recycling material (5) is shredded before blowing.

3. The method according to claim 1 or 2,
**characterized in that**
the molded material elements (5) have a size between 5 and 50 mm, preferably in the range between 15 mm and 30 mm.

4. The method according to any one of the preceding claims,
**characterized in that**
in a method step G after the method step F, further molded material elements (5) are blown by a second air flow preferably in a second filling run.

5. The method according to any one of the preceding claims,
**characterized in that**
before or during the method step B, a binder, preferably in the form of a thermosetting powder or a binding fiber or thermoplastic film residues is added.

6. The method according to any one of the preceding claims,
**characterized in that**
before or during the method step B, the fiber material is blown in.

7. The method according to any one of the preceding claims,
**characterized in that**
the molded material elements (5) and/or the molded part (7) are pressed in method step G, so that the molded material elements (5) are compacted.

8. The method according to any one of the preceding claims,
**characterized in that**
the connecting of the molded material elements (5) to each other by applying heat in method step E and pressing in method step G is performed in different tools, in particular **in that** the molded blank is transferred from a first tool to a second tool in an intermediate step.

9. The method according to any one of the preceding claims,
**characterized in that**
the multi-part mold (2, 3, 4, 6) is heated at least partially before blowing in the molded material elements (5) in method step B, preferably **in that** the lower mold and upper mold are heated before method step B.

## Revendications

1. Procédé de fabrication de pièces moulées (7) en trois dimensions avec un moule en plusieurs parties composé d'un moule inférieur, d'un moule supérieur d'insufflation et d'un moule supérieur (2, 3, 4, 6) avec des ouvertures, dont le côté intérieur détermine au moins partiellement le contour de la pièce moulée (7), comprenant les étapes de procédé suivantes :
A la fourniture du moule en plusieurs parties composé d'au moins un moule inférieur et un moule supérieur d'insufflation (2, 3),
B l'insufflation d'éléments de matériau de pièce moulée (5) par un courant d'air dans le moule en plusieurs parties (2, 3, 4, 6), dans lequel l'air s'échappe par des ouvertures dans le moule en plusieurs parties (2, 3, 4, 6) de sorte que les éléments de matériau de pièce moulée (5) s'accumulent sur les côtés intérieurs du moule en plusieurs parties (2, 3, 4, 6) ;
C le retrait du moule supérieur d'insufflation (3) ;
D le placement du moule supérieur (6) ;
E la liaison des éléments de matériau de pièce moulée (5) entre eux par apport de chaleur et/ou par un liant ;
F le pressage du moule en plusieurs parties composé du moule supérieur et du moule inférieur (2, 6) ;
**caractérisé en ce que**
du matériau de recyclage est utilisé comme éléments de matériau de pièce moulée (5).

2. Procédé selon la revendication 1,
**caractérisé en ce que**
le matériau de recyclage (5) est broyé avant l'insufflation.

3. Procédé selon la revendication 1 ou 2,
**caractérisé en ce que**
les éléments de matériau de pièce moulée (5) présentent une grandeur entre 5 et 50 mm, de préférence dans une plage entre 15 mm et 30 mm.

4. Procédé selon l'une quelconque des revendications précédentes,
**caractérisé en ce que**
d'autres éléments de matériau de pièce moulée (5) sont insufflés de préférence dans un second passage de remplissage par un courant d'air dans une étape de procédé G après l'étape de procédé F.

5. Procédé selon l'une quelconque des revendications précédentes,
**caractérisé en ce que**
un liant, de préférence sous la forme d'une poudre duroplastique ou une fibre liante ou des restes de film thermoplastiques est ajouté avant ou pendant l'étape de procédé B.

6. Procédé selon l'une quelconque des revendications précédentes,
**caractérisé en ce que**
du matériau de fibre est insufflé avant ou pendant l'étape de procédé B.

7. Procédé selon l'une quelconque des revendications précédentes,
**caractérisé en ce que**
les éléments de matériau de pièce moulée (5) et/ou la pièce moulée (7) sont pressés dans une étape de procédé G de sorte que les éléments de matériau de pièce moulée (5) soient compactés.

8. Procédé selon l'une quelconque des revendications précédentes,
**caractérisé en ce que**
la liaison des éléments de matériau de pièce moulée (5) est réalisée entre eux par apport de chaleur dans l'étape de procédé E et le pressage est réalisé dans l'étape de procédé G dans des outils différents en particulier **en ce que** l'ébauche de pièce moulée est transférée dans une étape intermédiaire d'un premier outil dans un second outil.

9. Procédé selon l'une quelconque des revendications précédentes,
**caractérisé en ce que**
le moule en plusieurs parties (2, 3, 4, 6) est chauffé au moins partiellement avant l'insufflation des éléments de matériau de pièce moulée (5) dans l'étape de procédé B, de préférence **en ce que** le moule inférieur et le moule supérieur sont chauffés avant l'étape de procédé B.
